# EUROPÄISCHE PATENTSCHRIFT

(11) **EP 3 326 884 B1**
(45) Veröffentlichungstag und Bekanntmachung des Hinweises auf die Patenterteilung: **15.04.2020**
(21) Anmeldenummer: 17202040.6
(22) Anmeldetag: 16.11.2017
(51) Int. Cl.: B61F 19/02, B61D 17/02

(54) **SCHIENENFAHRZEUG MIT SCHÜRZENKLAPPE**
RAIL VEHICLE WITH APRON VALVE
VÉHICULE SUR RAIL DOTÉ DE CLAPET DE JUPE

(30) Priorität: 23.11.2016 DE 102016223146
(43) Veröffentlichungstag der Anmeldung: 30.05.2018
(73) Patentinhaber: Bombardier Transportation GmbH, 10785 Berlin (DE)
(72) Erfinder: Trauter, Nico, 01445 Radebeul (DE); Wusching, Michael, 02681 Wilthen (DE); Meyer, Christian, 57080 Siegen (DE)
(74) Vertreter: Patentanwälte Bressel und Partner mbB

(56) Entgegenhaltungen:
- EP-A1- 2 883 777
- WO-A1-2010/086201
- DE-A1- 2 542 779
- DE-B- 1 070 205
- DE-C- 952 910
- JP-U- H0 653 356

## Beschreibung

Die Erfindung betrifft ein Schienenfahrzeug mit zumindest einer Schürzenklappe, die mit einem Gelenk am Wagenkasten drehbar angelenkt ist.

Um den Luftwiderstand zu verringern und aus optischen Gründen verfügen moderne Schienenfahrzeuge über eine stromlinienförmige Verkleidung. Diese Verkleidung ist über das Fahrwerk hinaus nach unten gezogen und bedeckt einen Teil der Räder.

Ein Teil des Fahrwerks, das Drehgestell, schwenkt bei einer Kurvenfahrt aus. Hier ergibt sich das Problem, dass dieses Drehgestell an die Verkleidung anschlägt und diese zerstört oder aber in seiner Drehung behindert ist.

Aus diesem Grund sind im Bereich des Fahrwerks in der Verkleidung bewegliche Schürzenklappen ausgebildet, welche die Beweglichkeit des Fahrwerks nicht einschränken. Sie müssen sich mit dem Drehgestell nach außen bewegen, aber sich bei der Rückbewegung in eine gerade Position wieder schließen, da es sonst bei der Einfahrt in einen Bahnhof zu Schäden an den Schürzenklappen und unter Umständen auch zu Verletzungen bei auf dem Bahnsteig stehenden Personen kommen kann.

Die DE948518 C schlägt zur Lösung des Problems eine Einrichtung zum Verstellen der im Bereich der Fahrzeugräder klappenförmig ausgebildeten Schürze von stromlinienförmig ausgekleideten Schienenfahrzeugen mit Drehgestellen vor, welche Lenkerführungen zwischen dem Drehgestellrahmen und der klappenförmig ausgebildeten Schürze aufweist.

Die DE 952910 C offenbart eine Einrichtung zur Führung einer im Bereich eines Fahrzeugrades angeordneten und in Abhängigkeit vom Drehgestellausschlag aus dem Verkleidungsprofil herausbringbaren Schürze an stromlinienförmig verkleideten Schienenfahrzeugen mit Drehgestellen, wobei in Fahrzeugquerrichtung ein- und ausziehbare Scherenführungen, mit ihrem einen Ende an der Schürze und mit ihrem anderen Ende an einem festen Punkt des Wagenkastens angelenkt sind.

Nachteilig an dem genannten Stand der Technik ist der Aufwand bei der zur Wartung des Fahrzeugs und Fahrwerks aufwendigen Demontage der Schürzenklappen.

Weiter ist der Aufbau umfänglich und enthält viele verschleißbehafteten Teile.

Die EP2883777 A1 schlägt daher ein Schienenfahrzeug mit mindestens einer Schürzenklappe vor, die über mindestens eine Verstelleinrichtung beweglich an einen Wagenkasten oder ein Untergestell des Schienenfahrzeugs angebracht ist, wobei die zumindest eine Verstelleinrichtung so ausgestaltet ist, dass bei einem Druck auf die Innenseite der Schürzenklappe eine Bewegung der Schürzenklappe aus einer Ausgangsposition nach außen in eine ausgestellte Position ermöglicht ist.

In dieser ausgestellten Position sind ein erster nach unten verlaufender Seitenrand der Schürzenklappe und/oder ein zweiter nach unten verlaufender Seitenrand der Schürzenklappe ausgestellt und stehen parallel oder im Wesentlichen parallel zu der Seitenwand des Wagenkastens.

Die Verstelleinrichtung weist weiter ein Federelement auf, dass so ausgestaltet ist, dass es bei Bewegung der Schürzenklappe in die ausgestellte Position gespannt wird und bei Wegnahme des Drucks auf die Innenseite der Schürzenklappe, die Schürzenklappe in die Ausgangsposition zurück stellt. Weiter enthält das Schienenfahrzeug ein Fahrwerk, das um eine vertikale Achse drehbar ist, wobei bei einer Drehung um die vertikale Achse das Fahrwerk die Schürzenklappe berühren kann, einen Druck auf die Innenseite der Schürzenklappe ausüben kann und dadurch die Schürzenklappe aus der Ausgangsposition in die ausgestellte Position bringen kann und wobei das Fahrwerk bei der Drehung die Schürzenklappe in einem vorderen Bereich der Schürzenklappe oder in einem hinteren Bereich der Schürzenklappe berührt und der zweite Seitenrand in der ausgestellten Position der Schürzenklappe nicht ausgestellt ist oder weniger ausgestellt ist als der erste Seitenrand, sodass die Schürzenklappe schräg zur Seitenwand steht.

Auch dieses vorgeschlagene Schienenfahrzeug kann die oben genannten Nachteile nicht ausreichend beheben.

Aufgabe der Erfindung ist es daher ein verbessertes Schienenfahrzeug mit einer Verstelleinrichtung bereitzustellen, welches einen oder mehrere der aufgeführten Nachteile überwindet.

Die Aufgabe wird durch ein Schienenfahrzeug, mit zumindest einem Wagenkasten, mit einem Ausschnitt und zumindest einem Fahrwerk gelöst, welches zumindest eine Schürzenklappe enthält, die an dem Wagenkasten mit einem Gelenk um eine vertikale Schürzenklappen-Drehachse drehbar angelenkt ist.

Die Erfindung betrifft im Einzelnen, ein Schienenfahrzeug, aufweisend zumindest einen Wagenkasten mit einem Ausschnitt und zumindest ein Fahrwerk, das um eine vertikale Fahrwerksdrehachse drehbar ist, zumindest eine Schürzenklappe, die an dem Wagenkasten mit einem Gelenk um eine vertikale Schürzenklappen-Drehachse drehbar angelenkt ist, wobei die Schürzenklappen-Drehachse zwischen einem vorderen Bereich und einem hinteren Bereich der Schürzenklappe angeordnet ist,
wobei bei einer Drehung des Fahrwerks das Fahrwerk eine Kraft auf die Schürzenklappe ausüben kann, sodass die Schürzenklappe um die Schürzenklappen-Drehachse mit dem vorderen Bereich nach außen drehbar ist und mit dem hinteren Bereich nach innen drehbar ist oder mit dem vorderen Bereich nach innen drehbar ist und mit dem hinteren Bereich nach außen drehbar ist.

Der vordere Bereich der Schürzenklappe ist ein in Fahrtrichtung vorderer Bereich. Der hintere Bereich der Schürzenklappe ist ein in Fahrtrichtung hinterer Bereich.

Getrennt werden der vordere und der hintere Bereich durch die Schürzenklappen-Drehachse. In einer Ausführungsform ist die Schürzenklappen-Drehachse mittig an der Schürzenklappe angeordnet, so dass der vordere Bereich und der hintere Bereich gleich groß sind.

In einer anderen Ausführungsvariante ist die Schürzenklappen-Drehachse von der Mitte versetzt an der Schürzenklappe angeordnet, so dass der vordere und der hintere Bereich nicht gleich groß sind. In letzterem Fall kann ein Ausgleich eventueller Spannungen zum Beispiel durch eine Kopplungseinrichtung zwischen Fahrwerk und Schürzenklappe erfolgen, welche benötigte Bewegungsfreiheitsgrade zulässt.

Die beispielsweise in einer Linkskurve ausgeübte Kraft des Fahrwerks auf die Schürzenklappe ist insbesondere ein Druck auf den vorderen Bereich der in Fahrtrichtung links angeordneten Schürzenklappe und insbesondere auch ein Druck auf den hinteren Bereich der in Fahrtrichtung rechts angeordneten Schürzenklappe.

In einigen Ausführungsformen der Erfindung kann bei einer Linkskurve zudem ein Zug auf den vorderen Bereich der in Fahrtrichtung rechts angeordneten Schürzenklappe aber auch ein Zug auf den hinteren Bereich der in Fahrtrichtung links angeordneten Schürzenklappe ausgeübt werden.

Bei einer Rechtkurve können die Druck/Kraftausübungen entsprechend umgekehrt sein, als oben für eine Linkskurve beschrieben.

Nach innen drehbar im Sinne der Erfindung bezeichnet die Drehbarkeit zum Wagenkasten hin.

Nach außen drehbar im Sinne der Erfindung bezeichnet die Drehbarkeit vom Wagenkasten weg.

Die Vorteile des erfindungsgemäßen Schienenfahrzeugs mit am Wagenkasten drehbar angelenkter Schürzenklappe sind vielfältig. Mit der Erfindung können in ihrer allgemeinen oder in einer speziellen Ausführungsform einer oder mehrere der nachfolgenden Vorteile erzielt werden:
Die Demontage der Schürzenklappen zur Wartung des Fahrzeugs und Fahrwerks ist einfach.

Aufwendige Verschleißteile oder zusätzliche Bauteile zur Befestigung einer Schürzenklappe an einem Drehgestell entfallen, wie beispielsweise ein massiver Halter, der für die Montage der Schürzenklappe am Drehgestell durch den Abstand zur Außenlinie des Wagenkastens und die höheren Belastungen notwendig gewesen wäre.

Auch ein aufwendiger Toleranzausgleich zwischen den am Drehgestell montierten Schürzenklappen und dem Wagenkasten entfällt, da erfindungsgemäß die Schürzenklappen direkt am Wagenkasten angebracht sind.

Erfindungsgemäß ist nur ein minimaler vertikaler Abstand zwischen Schürzenklappe und Wagenkastenkontur für die Ausdrehbewegung erforderlich. Dies verbessert die Optik und verringert den Luftwiderstand.

Weiter sind für die erfindungsgemäße Lösung keine Ausschnitte in den Schürzenklappen für die Freigängigkeit zwischen Drehgestell und Schürzenklappe notwendig.

In einer Ausführungsform der Erfindung überträgt bei einer Drehung des Fahrwerks das Fahrwerk die Kraft durch Berühren der Schürzenklappe in dem vorderen Bereich und/oder dem hinteren Bereich. Anders ausgedrückt schlägt das Fahrwerk an der Schürzenklappe an.

In dieser Ausführungsform kann das Fahrwerk und/oder die Schürzenklappe ein Anschlagselement aufweisen, wie beispielsweise eine Platte, die an dem Fahrwerk angeordnet ist und an die Schürzenklappe beim Ausdrehen des Fahrwerks anschlägt.

In dieser Ausführungsform kann die Kraft beispielsweise über ein Rollelement übertragen werden, welches an der Klappe oder dem Fahrwerk angeordnet ist. Das Rollelement kann die Kraft durch Berühren und Abrollen entweder an dem Fahrwerk oder der Schürzenklappe direkt oder an einer gegenüber dem Rollelement angeordneten Platte übertragen.

In einer besonderen erfindungsgemäßen Variante kann das Rollelement mittels einer Halterung mit Verlängerung an dem Fahrwerk oder der Schürzenklappe angeordnet sein.

In einer anderen Ausführungsform der Erfindung weist das Schienenfahrzeug eine Kopplungseinrichtung auf, welche das Fahrwerk mit der Schürzenklappe koppelt, sodass bei einer Drehung des Fahrwerks die Kraft durch die Kopplungseinrichtung auf die Schürzenklappe übertragbar ist.

Bevorzugt ist die Kopplungseinrichtung als eine Lenkerführung oder ein Gestänge ausgebildet.

Die Kopplungseinrichtung kann mit gebräuchlichen Methoden, vorzugsweise mittels Schraubverbindungen, an die Schürzenklappe und an das Fahrwerk angebracht sein.

In einer Ausführungsform der Erfindung ist das Schienenfahrzeug dergestalt ausgebildet, dass mit der Kopplungseinrichtung bei Rückdrehung des Fahrwerks die Schürzenklappe in eine Ausgangsposition rückstellbar ist.

Als Ausgangsposition im Sinne der Erfindung ist die Ausrichtung der Schürzenklappe parallel zur Längsachse des Wagenkastens bezeichnet.

In einer anderen Ausführungsform der Erfindung weist das Schienenfahrzeug ein Federelement auf, womit bei Rückdrehung des Fahrwerks die Schürzenklappe in eine Ausgangsposition rückstellbar ist.

Eine Ausführungsvariante des erfindungsgemäßen Schienenfahrzeugs weist das Schienenfahrzeug eine Drehsäule oder eine Spindel als Gelenk auf.

In einer weiteren Ausführungsform der Erfindung ist die Schürzenklappend-Drehachse für die Schürzenklappe mittig an der Schürzenklappe oder versetzt zur Mitte der Schürzenklappe angeordnet. Im letzteren Fall sind der vordere Bereich und der hintere Bereich ungleich groß.

Die Schürzenklappe kann an einem Längsträger des Wagenkastens angelenkt sein , der oberhalb des Ausschnitts für die Schürzenklappe verläuft.

Vorteilhafterweise kann das erfindungsgemäße Schienenfahrzeug ein Federelelement enthalten, welches eine Vorspannung aufweist und über welches die Schürzenklappe an den Wagenkasten gekoppelt ist. Das Federelement ist vorzugsweise rechts und links von der Schürzenklappen-Drehachse angeordnet. Es kann mit einen Ende an der Innenseite der Schürzenklappe und mit dem anderen Ende an einer tragenden Struktur des Wagenkastens oder dem Untergestell des Wagenkastens mittels Befestigungselementen angebracht sein. Damit kann ein Klappern der Schürzenklappen vermieden werden.

Als Befestigungselemente können alle gebräuchlichen Befestigungselemente zum Einsatz kommen, besonders bevorzugt ist das Federelement mittels Schraubverbindungen, befestigt, um eine Demontage bei einer Wartung zu erleichtern.

Die erfindungsgemäße Vorrichtung ist in allen Schienenfahrzeugen des öffentlichen Nah- und Fernverkehrs, wie beispielsweise in Straßenbahnen, Stadtbahnen, Metros aber auch Vollbahnen einsetzbar.

Weitere Vorteile und Ausgestaltungen der Erfindung ergeben sich aus der nachfolgenden Beschreibung von Ausführungsbeispielen unter Bezugnahme auf die beiliegenden Figuren. Es zeigen:
- Fig. 1: Aufsicht Schnittdarstellung Wagenkasten und Fahrwerk;
- Fig. 2: Aufsicht Schnittdarstellung Wagenkasten, Schürzenklappe und Fahrwerk in ausgestellter Form;
- Fig. 3: Seitenansicht Schürzenklappe am Wagenkasten;
- Fig. 4: Aufsicht Schnittdarstellung Wagenkasten und Fahrwerk mit Seitenansicht Schnittdarstellung Wagenkasten und Fahrwerk.

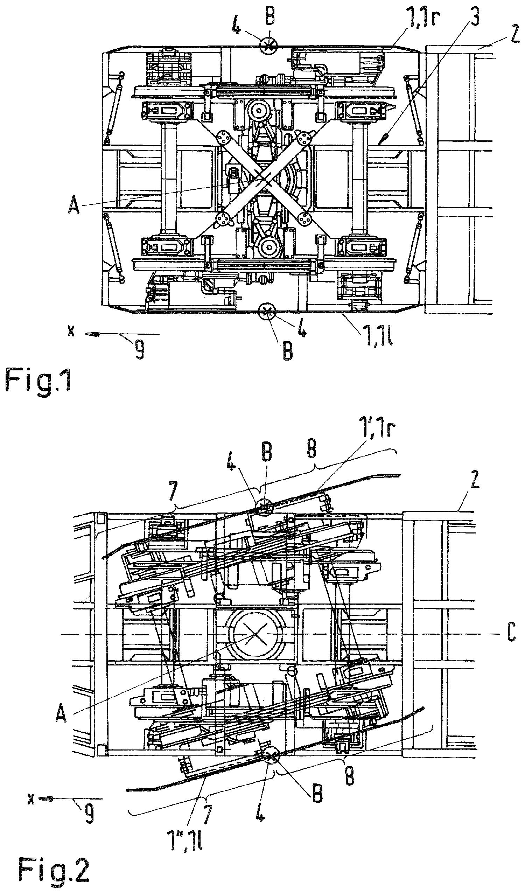

In Figur 1 sind Wagenkasten 2 und Fahrwerk 3 in der Aufsicht dargestellt. Es sind zwei verschiedene Möglichkeiten für die ausgestellte Position der Schürzenklappe 1 gezeigt. Die Schürzenklappe 1 zeigt ihre Grundposition bei einem geradeaus gestelltem Fahrwerk 3. Der Pfeil 9 zeigt die Fahrtrichtung X an.

Bei einer Linkskurve in Fahrtrichtung X dreht sich das Fahrwerk 3 und mit ihm bewegen sich die Schürzenklappen 1 in eine ausgestellte Position 1'.

Bei einer Rechtskurve in Fahrtrichtung X dreht sich das Fahrwerk in die entgegengesetzte Richtung und die Schürzenklappen bewegen sich in eine ausgestellte Position 1".

Eine mögliche Position für Gelenke 4 ist ebenfalls gezeigt.

Die vertikale Fahrwerksdrehachse A für eine Drehung des Fahrwerks 3 in einer Rechts- oder Linkskurve sowie die vertikale Schürzenklappen-Drehachse B sind eingezeichnet. Die Drehachsen A und B stehen senkrecht auf der Zeichnungsebene bzw. in Blickrichtung des Betrachters.

In Figur 2 ist die Drehung des Fahrwerks 3 und der Schürzenklappen 1 um eine vertikale Fahrwerksdrehachse A im Verhältnis zur Position des Wagenkastens 2 dargestellt.

Das Fahrwerk 3 dreht sich bei einer Kurve und die Schürzenklappen bewegen sich entsprechend in die ausgestellten Positionen 1' und 1". Der Wagenkasten 4 bleibt im Gegensatz dazu in der Grundposition.

Bei einer Drehung des Fahrwerks 3 um die vertikale Fahrwerksdrehachse A kann das Fahrwerk 3 die Schürzenklappe 1 berühren und damit einen Druck auf die Innenseite der Schürzenklappe 1 ausüben, so dass sich die Schürzenklappe 1 parallel oder annähernd parallel mit dem Fahrwerk 3 um eine vertikale Schürzenklappen-Drehachse B am Gelenk 4 mitbewegt und dadurch die Schürzenklappe 1 von einer Ausgangsposition in eine ausgestellte Position 1' oder 1" gebracht wird.

Anhand der Schürzenklappen-Drehachse B als Trennlinie kann die Schürzenklappe 1 in einen in Fahrtrichtung X vorderen Bereich 7 und einen hinteren Bereich 8 eingeteilt werden, wobei der vordere Bereich 7 und der hintere Bereich 8 nicht zwingend geich groß sein müssen.

Bei einer Linkskurve in Fahrtrichtung X übt das Fahrwerk 3 einen Druck auf die Innenseite des vorderen Bereichs 7 der in Fahrtrichtung X von der Fahrzeuglängsachse C links angeordneten Schürzenklappe 1l aus.

Gleichzeitig wird ein Druck des Fahrwerks 3 auf die Innenseite des hinteren Bereichs 8 der in Fahrtrichtung X von der Fahrzeuglängsachse C rechts angeordneten Schürzenklappe 1r ausgeübt.

Weiter kann beispielsweise das Fahrwerk 3 bei der Drehung in die entgegengesetzte Richtung einen Druck auf die Innenseite der Schürzenklappe 1l im hinteren Bereich 8 und einen Druck auf die Innenseite der Schürzenklappe 1r im vorderen Bereich 7 ausüben und damit die Schürzenklappe 1" zurück in die Ausgangsposition oder in die entgegengesetzt ausgestellte Position bringen.

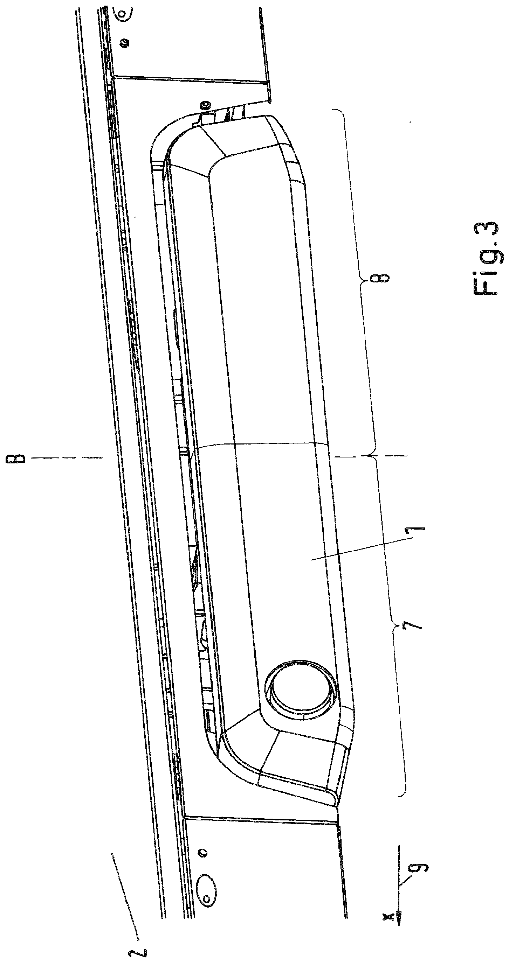

Die Einteilung der Schürzenklappe in einen vorderen Bereich 7 und einen hinteren Bereich 8 in Bezug auf die Fahrtrichtung X ist nochmals in Figur 3 dargestellt. Die Trennung beider Bereiche erfolgt durch die Schürzenklappen-Drehachse B.

Ebenso dargestellt ist die Positionierung der Schürzenklappe 1 am Fahrzeug. Die Schürzenklappe 1 befindet sich in der Ausgangsposition und fügt sich in die stromlinienförmige Verkleidungsstruktur des Wagenkastens 2 ein.

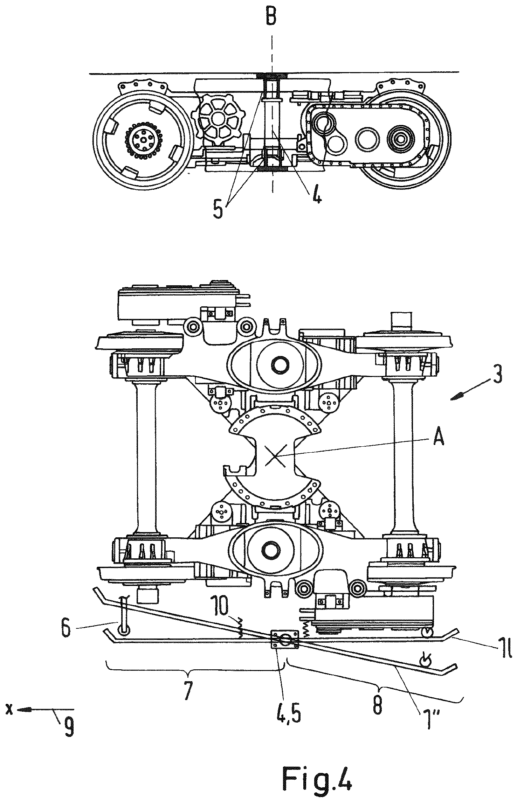

Figur 4 zeigt nochmals die Schürzenklappe 1 in verschiedenen ausgestellten Positionen. Ein Rollelement 6 zur Übertragung des Drucks ist beispielhaft eingetragen.

Weiter dargestellt ist eine mögliche Position für das Gelenk 4 mit Gleitlagern 5.

Eine mögliche Anordnung für Federelemente 10 ist gezeigt. Vorzugsweise sind mindestens zwei Federelemente 10 pro Schürzenklappe angeordnet, mindestens eines in dem vorderen Bereich 7 und mindestens eines in dem hinteren Bereich 8.

Es ist die in Fahrtrichtung X von der Fahrzeuglängsachse C links angeordnete Schürzenklappe 1l in der Grundposition dargestellt. Besteht eine Vorspannung, üben die Federelemente 10 permanent einen Zug auf die Schürzenklappe 1l aus.

Weiter ist die ausgestellte Position der Schürzenklappe 1" in einer Rechtskurve in Fahrtrichtung X gezeigt. In dieser Stellung verstärkt sich der Zug des im hinteren Bereich 8 der Schürzenklappe 1" angeordneten Federelements 10 auf die Innenseite des hinteren Bereichs 8 der Schürzenklappe 1".

Gleichzeitig nimmt bei bestehender Vorspannung der Zug des im vorderen Bereichs 7 der Schürzenklappe 1" angeordneten Federelements 10 auf die Innenseite des vorderen Bereichs 7 der Schürzenklappe 1" ab.

Bei einer Linkskurve gilt das Gleiche entsprechend umgekehrt.

### Bezugszeichenliste

- 1: Schürzenklappe
- 1': Schürzenklappe in ausgestellter Position
- 1": Schürzenklappe in ausgestellter Position
- 1l: in Fahrtrichtung X von der Fahrzeuglängsachse C links angeordnete Schürzenklappe
- 1r: in Fahrtrichtung X von der Fahrzeuglängsachse C rechts angeordnete Schürzenklappe
- 2: Wagenkasten
- 3: Fahrwerk
- 4: Gelenk
- 5: Gleitlager
- 6: Rollelement
- 7: vorderer Bereich
- 8: hinterer Bereich
- 9: Fahrtrichtung
- 10: Federelement
- A: vertikale Fahrwerksdrehachse
- B: Schürzenklappen-Drehachse
- C: Fahrzeuglängsachse

## Patentansprüche

1. Schienenfahrzeug, aufweisend
- zumindest einen Wagenkasten (2) mit einem Ausschnitt und
- zumindest ein Fahrwerk (3), das um eine vertikale Fahrwerksdrehachse (A) drehbar ist,
- zumindest eine Schürzenklappe (1), die an dem Wagenkasten 2 mit einem Gelenk (4) um eine vertikale Schürzenklappen-Drehachse (B) drehbar angelenkt ist, wobei die Schürzenklappen-Drehachse (B) zwischen einem vorderen Bereich (7) und einem hinteren Bereich (8) der Schürzenklappe (1) angeordnet ist,
wobei
bei einer Drehung des Fahrwerks (3) das Fahrwerk (3) eine Kraft auf die Schürzenklappe (1) ausüben kann, sodass die Schürzenklappe (1) um die Schürzenklappen-Drehachse (B) mit dem vorderen Bereich (7) nach außen drehbar ist und mit dem hinteren Bereich (8) nach innen drehbar ist oder mit dem vorderen Bereich (7) nach innen drehbar ist und mit dem hinteren Bereich (8) nach außen drehbar ist.

2. Schienenfahrzeug nach Anspruch 1, wobei bei einer Drehung des Fahrwerks (3) das Fahrwerk (3) die Kraft durch Berühren der Schürzenklappe (1) in dem vorderen Bereich (7) und/oder dem hinteren Bereich (8) übertragen kann.

3. Schienenfahrzeug nach Anspruch 2, **dadurch gekennzeichnet, dass** die Kraft vom Fahrwerk (3) auf die Schürzenklappe (1) über ein am Fahrwerk (3) oder an der Schürzenklappe (1) angeordnetes Rollelement (6) übertragen werden kann.

4. Schienenfahrzeug nach Anspruch 1 oder 2, aufweisend eine Kopplungseinrichtung, welche das Fahrwerk (3) mit der Schürzenklappe (1) koppelt, sodass bei einer Drehung des Fahrwerks (3) die Kraft durch die Kopplungseinrichtung auf die Schürzenklappe (1) übertragbar ist.

5. Schienenfahrzeug nach Anspruch 4, wobei die Kopplungseinrichtung eine Lenkerführung oder ein Gestänge ist.

6. Schienenfahrzeug nach Anspruch 4 oder 5, wobei mit der Kopplungseinrichtung bei Rückdrehung des Fahrwerks (3) die Schürzenklappe (1) in eine Ausgangsposition rückstellbar ist.

7. Schienenfahrzeug nach einem der vorangehenden Ansprüche, aufweisend ein Federelement (10), womit bei Rückdrehung des Fahrwerks (3) die Schürzenklappe (1) in eine Ausgangsposition rückstellbar ist.

8. Schienenfahrzeug nach Anspruch 7, **dadurch gekennzeichnet, dass** das Federelement (10) in der Ausgangsposition eine Vorspannung aufweist.

9. Schienenfahrzeug nach einem der vorangehenden Ansprüche, **dadurch gekennzeichnet, dass** das Gelenk (4) eine Drehsäule oder eine Spindel ist.

10. Schienenfahrzeug nach einem der vorangegangenen Ansprüche, **dadurch gekennzeichnet, dass** die Schürzenklappen-Drehachse (B) mittig an der Schürzenklappe (1) oder versetzt zur Mitte der Schürzenklappe (1) angeordnet ist.

## Claims

1. A rail vehicle, comprising:
- at least one car body (2) including a cut-out and
- at least one running gear (3), which can be rotated about a vertical running gear rotational axis (A),
- at least one apron flap (1), which is hinged on the car body (2) by way of a hinge (4) so as to be rotatable about a vertical apron flap rotational axis (B), the apron flap rotational axis (B) being situated between a front region (7) and a rear region (8) of the apron flap (1),
wherein
during a rotation of the running gear (3), the running gear (3) is able to exert a force on the apron flap (1) so that the apron flap (1) can be outwardly rotated about the apron flap rotational axis (B) with the front region (7) and inwardly with the rear region (8), or can be inwardly rotated with the front region (7) and outwardly rotated with the rear region (8).

2. The rail vehicle according to claim 1, wherein, during a rotation of the running gear (3), the running gear (3) is able to transmit the force by contact with the apron flap (1) in the front region (7) and/or the rear region (8).

3. The rail vehicle according to claim 2, **characterized in that** the force can be transmitted from the running gear (3) to the apron flap (1) by way of a roll element (6) arranged on the running gear (3) or on the apron flap (1).

4. The rail vehicle according to claim 1 or 2, comprising a coupling device, which couples the running gear (3) to the apron flap (1) so that, during a rotation of the running gear (3), the force can be transmitted to the apron flap (1) by the coupling device.

5. The rail vehicle according to claim 4, wherein the coupling device is a link guide or a rod.

6. The rail vehicle according to claim 4 or 5, wherein the apron flap (1) can be returned into a starting position by the coupling device with a back-rotation of the running gear (3).

7. The rail vehicle according to any one of the preceding claims, comprising a spring element (10) by which the apron flap (1) can be returned into a starting position with a back-rotation of the running gear (3).

8. The rail vehicle according to claim 7, **characterized in that** the spring element (10) is preloaded in the starting position.

9. The rail vehicle according to any one of the preceding claims, **characterized in that** the hinge (4) is a rotating pillar or a spindle.

10. The rail vehicle according to any one of the preceding claims, **characterized in that** the apron flap rotational axis (B) is arranged centrally on the apron flap (1) or offset from the center of the apron flap (1).

## Revendications

1. Véhicule sur rail, présentant
- au moins une caisse (2) avec une découpe et
- au moins un châssis (3), qui est rotatif autour d'un axe de rotation de châssis vertical (A),
- au moins un clapet de jupe (1), qui est articulé de manière rotative à la caisse (2) avec une articulation (4) autour d'un axe de rotation de clapet de jupe vertical (B), dans lequel l'axe de rotation de clapet de jupe (B) est agencé entre une zone avant (7) et une zone arrière (8) du clapet de jupe (1),
dans lequel
lors d'une rotation du châssis (3), le châssis (3) peut exercer une force sur le clapet de jupe (1), de sorte que le clapet de jupe (1) est rotatif autour de l'axe de rotation de clapet de jupe (B) vers l'extérieur avec la zone avant (7) et est rotatif vers l'intérieur avec la zone arrière (8) ou est rotatif vers l'intérieur avec la zone avant (7) et est rotatif vers l'extérieur avec la zone arrière (8).

2. Véhicule sur rail selon la revendication 1, dans lequel lors d'une rotation du châssis (3), le châssis (3) peut transmettre la force par contact du clapet de jupe (1) dans la zone avant (7) et/ou la zone arrière (8).

3. Véhicule sur rail selon la revendication 2, **caractérisé en ce que** la force peut être transmise du châssis (3) au clapet de jupe (1) par le biais d'un élément roulant (6) agencé au niveau du châssis (3) ou au niveau du clapet de jupe (1).

4. Véhicule sur rail selon la revendication 1 ou 2, présentant un dispositif de couplage, lequel couple le châssis (3) avec le clapet de jupe (1), de sorte que lors d'une rotation du châssis (3), la force peut être transmise par le dispositif de couplage sur le clapet de jupe (1) .

5. Véhicule sur rail selon la revendication 4, dans lequel le dispositif de couplage est un guide de bras articulé ou une tringlerie.

6. Véhicule sur rail selon la revendication 4 ou 5, dans lequel le clapet de jupe (1) peut être ramené dans une position de départ avec le dispositif de couplage lors de la rotation inverse du châssis (3).

7. Véhicule sur rail selon l'une quelconque des revendications précédentes, présentant un élément ressort (10), avec lequel le clapet de jupe (1) peut être ramené dans une position de départ lors de la rotation inverse du châssis (3).

8. Véhicule sur rail selon la revendication 7, **caractérisé en ce que** l'élément ressort (10) présente une précontrainte dans la position de départ.

9. Véhicule sur rail selon l'une quelconque des revendications précédentes, **caractérisé en ce que** l'articulation (4) est une colonne rotative ou une broche.

10. Véhicule sur rail selon l'une quelconque des revendications précédentes, **caractérisé en ce que** l'axe de rotation de clapet de jupe (B) est agencé au milieu du clapet de jupe (1) ou décalé par rapport au milieu du clapet de jupe (1).
